# EUROPEAN PATENT SPECIFICATION

(11) **EP 0 843 982 B1**
(45) Date of publication and mention of the grant of the patent: **09.04.2003**
(21) Application number: 97117922.1
(22) Date of filing: 16.10.1997
(51) Int. Cl.: A47J 31/40

(54) **Automatic machine for preparing single-dose hot beverages such as coffee and the like**
Automatische Maschine zum Zubereiten von Heissgetränken aus Einzelportionen, wie Kaffee oder dergleichen
Machine automatique pour préparer des boissons chaudes en portion unique, tel que le café ou similaire

(30) Priority: 06.11.1996 IT PN960062
(43) Date of publication of application: 27.05.1998
(73) Proprietor: Necta Vending Solutions S.p.A., 24030 Valbrembo (BG) (IT)
(72) Inventor: Bianchi, Roberto, 24100 Bergamo (IT); Pesenti, Giancarlo, 24030 Almenno San Bartolomeo, Bergamo (IT)
(74) Representative: Agostini, Agostino

(56) References cited:
- WO-A-80/01451
- FR-A- 2 150 177
- GB-A- 2 178 645
- US-A- 3 552 976
- US-A- 4 984 511
- US-A- 5 479 849

## Description

The present invention refers to an automatic machine for preparing single-dose hot beverages starting from a mixture of hot water and a basic product, such as non freeze-dried coffee powder, tea leaves and the like, which, after a steeping process at atmospheric pressure, is filtered and delivered towards the dispensing outlet.

Such a preparation method, which is generally known in the art as the "fresh-brew" method, is implemented in a number of automatic hot-beverage vending machines that are installed in such public sites and places as factories, schools, hospitals, stations, etc.

For them to be capable of ensuring the greatest possible global satisfaction among the users, such machines should be able to prepare beverages with such qualities as best and most appreciated and enjoyed by the consumers, such as a good, agreeable fragrance, an optimum temperature and the absence of froth; they should furthermore prevent the basic product from being wasted to any extent, ie. ensure as low as possible a usage of basic product, as well as ensure a sustained beverage preparation rate in order to prevent consumers waiting for their beverage to be dispensed from having to queue up for a long time, be relatively low-cost in their construction and have limited maintenance requirements.

The flavour-related qualities of the beverages are closely connected with the manner in which the steeping and filtration process is carried out, the accuracy with which, after each preparation, the remainders of the basic product used to prepare the beverage are removed from the filter in which they are retained, and, of course, also the actual amount of basic product used for each single dose of prepared beverage. The steeping process, or the infusion, is in turn correlated with the beverage preparation rate. Finally, as this is the case with any kind of electromechanical machine or piece of equipment, the simplicity and robustness of the construction are at the basis of a compliance with the above cited low cost and low maintenance requirements.

Among the machines of the "fresh-brew" type that are already known in the art, those described in the patent specifications US-A-3 552 976, GB-A-2 178 645, EP-A-296 478 appear to be of some interest in this connection. However, even these machines, although undeniably ingenious, fail to allow for full satisfaction.

In particular, the machine described in US-A-3 552 976 calls for air taken in from the surrounding ambient to be insufflated into the hot water and basic product mixture during the infusion or steeping process in view of improving the quality of the resulting beverage and accelerating the rate of preparation thereof. Unfortunately, said mixture is likely to be in this way cooled down even to a considerable extent by said air, thereby impairing a gustative quality that is particularly important for consumers in general. Furthermore, this machine appears to be considerably complicated in its construction and requires the use of paper filters so that they cause thair operators to face a lot of well-known disposal problems.
To the same purposes as cited above, the machine described in GB-A-2 178 645 calls for compressed air or steam to be insufflated in view of stirring the mixture before the latter is conveyed into the steeping or infusion chamber, as well as during the displacement of the piston that drives it, through the filter, towards the dispensing outlet. Under particular circumstances it may however well happen that a certain amount of froth forms on the so prepared beverage due to the steam-liquid orcompressed air-steam emulsion. Such a frothing is felt as a disagreeable occurrence by a number of consumers.

Finally, the machine described in EP-A-296 478 is provided with a pair of 5 pistons and, underneath the infusion chamber, under interposition of a filter that is made preferably of metal and therefore is of a reusable type, an extraction chamber. One of said pistons first starts by taking in air from the beverage dispensing outlet and insufflating the same air into the infusion chamber; it then forces the mixture into the extraction chamber through the filter. The second piston conveys the beverage from the extraction chamber towards the dispensing outlet. This machine offers the mainly ergonomic advantage of a dispensing outlet which can be located in a higher position with respect of the two above mentioned chambers. However, it is not fully successful in preventing the mixture from cooling down to a certain extent. It furthermore requires construction which is more complicated and, therefore, also unavoidably more expensive as far as the maintenance is concerned.

It therefore is a main purpose of the present invention to provide a machine of the "fresh-brew" type for automatically preparing and dispensing single-dose hot beverages, such as coffee, tea and the like, which, in a line with the above mentioned issues, are capable of ensuring full satisfaction under all points of view. A further purpose of the present invention is to provide a machine which is robust, reliable and has easier and lower maintenance requirements with respect to the machines of a similar kind and type being currently available on the marketplace, without this implying any significant increase in the costs thereof.

The present invention therefore relates to a machine having the characteristics as substantially recited in the appended claims.

Anyway, the invention will be more readily and clearly understood from the description of a preferred, but not exclusive embodiment thereof that is given below by way of non-limiting example with reference to the accompanying drawings, in which
- Figure 1 is an overall, partially cross-sectional side view of an automatic coffee preparing and vending machine;
- Figure 2 is a view illustrating the same machine as shown in Figure 1, however with the individual parts making up the machine shown separately;
- Figure 3 is a top view, partially along the section plane III-III of Figure 1, of some constructive details of the machine, shown separately.

In view of rationalizing its manufacturing and simplifying its maintenance, the machine according to the invention consists of a number of different units that are connected with each other.

A first such unit comprises in a per se known manner: an infusion or steeping chamber 1 that is in the shape of a cylinder arranged vertically and open at both its top and bottom ends 2 and 3, respectively; a conventional cyclone-like apparatus 4 for delivering both the hot water through a piping 5 and the ground coffee powder (or any other basic product as required for the preparation of the particular beverage) through a funnel 6 at the same time; a piston 7, with a rod 71 and a gudgeon pin 72, which is vertically displaceable along the infusion chamber 1.

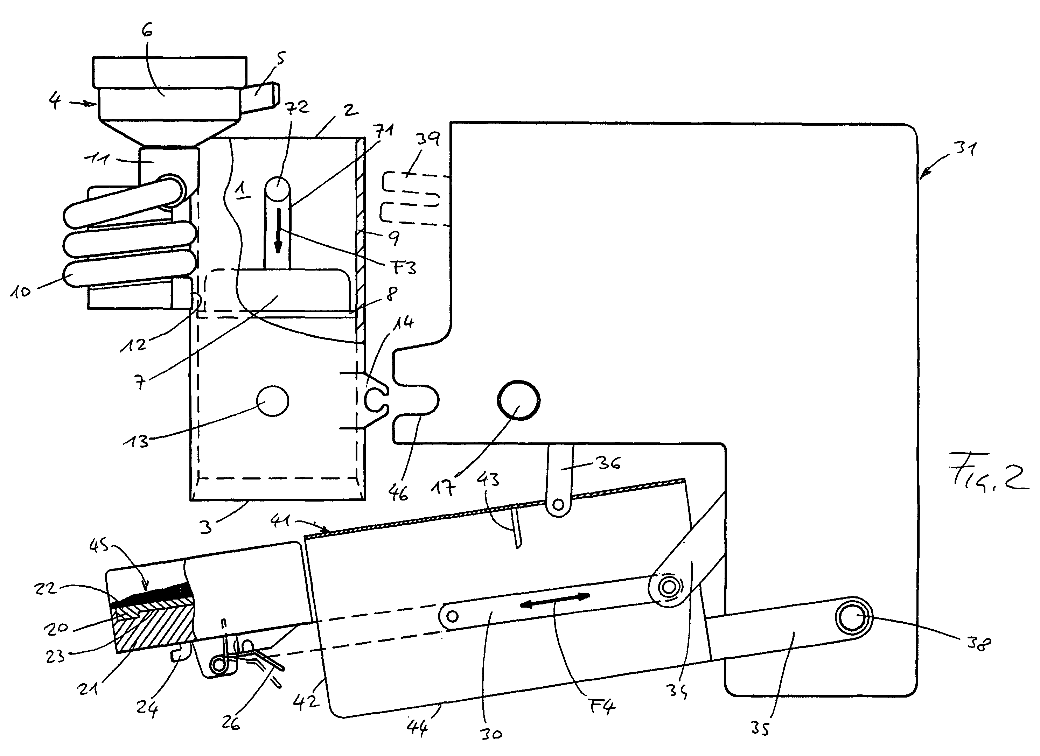

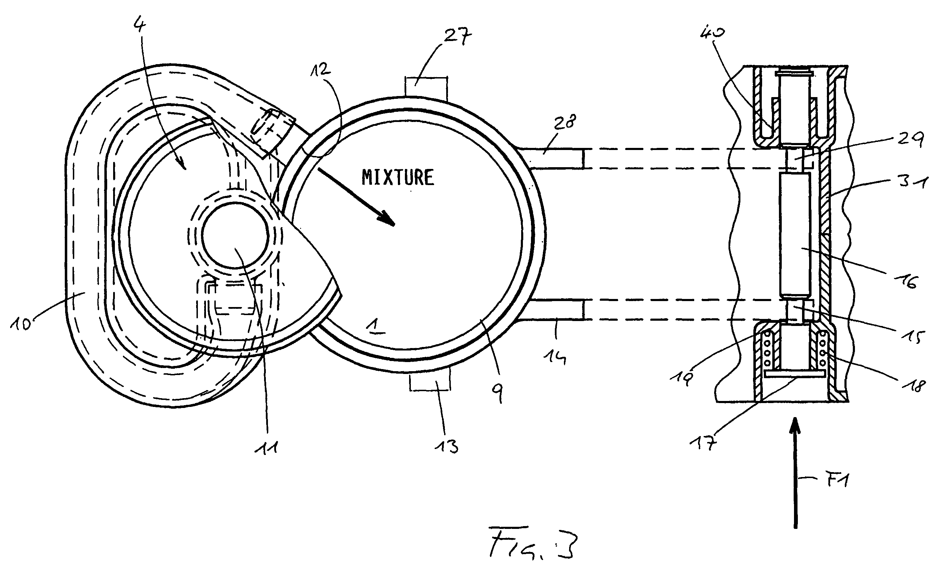

The main feature of the machine according to the present invention resides in the fact that such a first unit, further to the above cited parts, also comprises a descending coiled tube 10 which is arranged between the cyclone-like apparatus 4 and the infusion chamber 1 and is an integral part thereof. The descending coiled tube 10 starts at the outlet 11 of the cyclone-like apparatus 4 and terminates with a hole 12 provided for letting the hot water-coffee mixture into the infusion chamber 1, as this can best be seen in Figures 2 and 3. Said coiled tube is capable of imparting a whirling motion which, in a particularly simple and effective manner, brings about a particularly high extent of homogenization of the two componernts of the mixture, ie. the hot water and the basic product required for the requested beverage, in advance of the subsequent infusion process that takes place inside the chamber 1. All this therefore constitutes an improved method for the preparation of the beverage, as this will be more clearly illustrated further on.

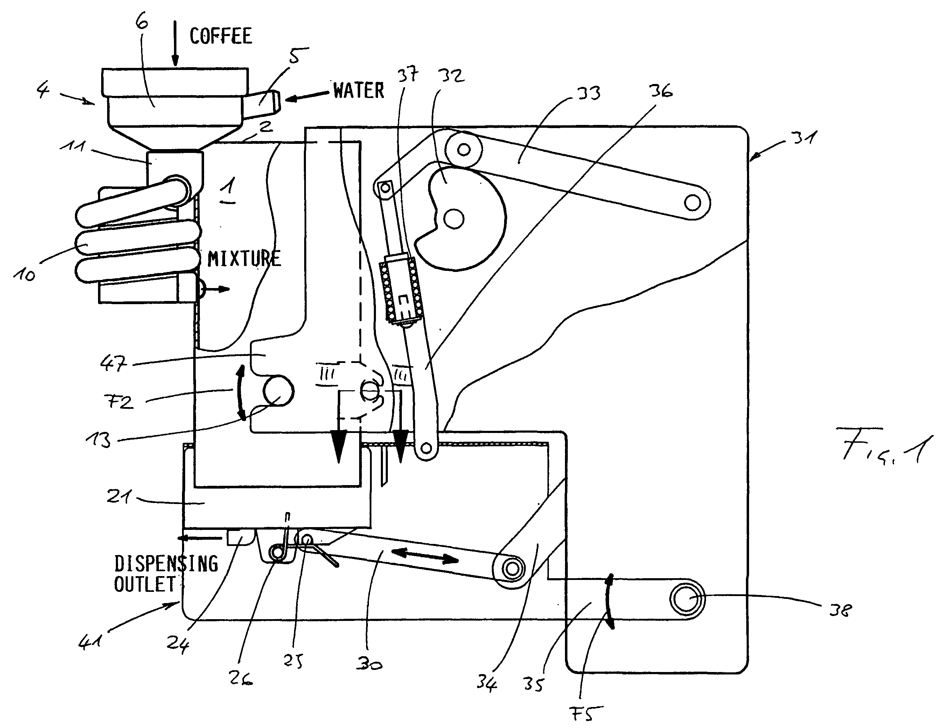

A second unit of the machine comprises, appropriately mounted on a rigid support ring 21, a metal filter 20 that is permeable to the liquids and impermeable to the beverage basic products and has a first (top) surface 22 and a second (lower) surface 23. The support ring 21 has, under the second surface 23 of the filter 20, a tube 24 for conventionally delivering the beverage up to the dispensing outlet (not shown) of the machine. The support ring 21 is attached removably, in view of enabling tyhe filter 20 to be cleaned, to the end portion of a connecting rod 30 by means of a slot 25 and a retaining spring 26. Owing to the connecting rod 30 being capable of oscillating in the directions shown by the double arrow F4 through the actuation of a therewith associated crank 34 (described in greater detail further on), the filter 20 can be positioned in a tightly sealing manner on the lower portion 3 of the chamber 1 (see Figures 1 and 2).

A third unit of the machine according to the present invention is substantially constituted by a first stationary housing 31 which encloses the (motive) means provided for actuating the moving parts of the machine.

The kinematic mechanism of the piston 7, which is shown only partially since basically of a conventional kind, is enclosed in said first housing 31 and comprises a clevis 39 adapted to link up with the pin 72, a rotating cam 32 and two levers 33 and 35. A tappet 36 with a spring 37 enable slacks of the above cited moving parts to be taken up. By its kinematic mechanism the piston 7 is pushed downwards (arrow F3 in Figure 2) and, since it has a perimetrical edge 8 in contact with the internal side surface 9 of the infusion chamber 1, drives the hot water-basic product mixture through the filter 20 in the process. The residuum 45 of the basic product collects on the top surface 22 of the filter 20, while the prepared beverage leaves the same filter through the lower surface 23 thereof and is conveyed towards the dispensing outlet along the tube 24.

A part of the moving parts enclosed in said stationary housing 31 is also the crank 34 for the actuation of the connecting rod 30 which, as this has been explained above, causes the support ring 21 of the filter 20 to oscillate in the directions shown by the double arrow F4 (see Figures 1 and 2).

The fourth and last unit of the machine according to the invention substantially comprises a second housing 41, which is oscillating (arrow F5 in Figure 1) owing to its being hinged by means of a lever 35 on an axis 38 at the base of the first stationary housing 31 and supported by the tappet 36. Said second housing 41 is frontally open at 42 so as to enable the filter 20 with its support ring 21 to be withdrawn by the connecting rod 30 inside said housing after each dispensing of the beverage, and rearranged for the next dispensing phase. To this end, a scraping spatula 43, which removes the basic product residuum 45 from the surface 22 as the filter 20 is being withdrawn, is provided on the upper internal surface of the oscillating housing 41 which, according to a feature of the the present invention, is open also on the bottom side at 44. The residuum 45, as soon as it is removed from the filter 20 by the action of the scraping spatula 43, fall through said open bottom 44 into a collecting bucket or bin (not shown) provided therebelow.

From the above description it can be fully appreciated that the arrangement of the scraping spatula 43, the kinematic mechanism that moves the filter 20 with its supporting ring 21, and the open faces 42 and 44 of the oscillating housing 41 most advantageously enable the overall size of the machine to be kept as compact as possible.

The whole first unit of the machine, for it to be capable of being supported by the stationary housing 31 that forms the third unit, is provided on the outside of the infusion chamber 1 with a pair of diametrically opposed protrusions 13 and 27 which are adapted to engage, with a certain backlash, forks 46 and 47 provided on the stationary housing 31 (for reasons of simplicity, only a protrusion 13 and a fork 47 are shown in Figure 1). The infusion chamber 1 is in this way able to automatically settle down angularly with respect to the stationary housing 31 (double arrow F2 in Figure 1), thereby ensuring a tight sealing action of the filter 20 on the lower end portion 3.

On the outside of the infusion chamber 1, on the side facing the same stationary housing 31, there are furthermore provided two parallel brackets 14 and 28 that are adapted to hook onto two reduced sections 15 and 29 of a pin 16. Said pin 16 is mounted with a retaining spring 18 on a pair of seats 19 and 40 provided in the 0 side walls of the first housing 31 and has, at one of its end portions, a release push-button 17. Therefore, when this button 17 is pushed in the direction shown by the arrow F1 in Figure 3, the whole first unit can be conveniently separated from the stationary housing 31 and removed from the rest of the machine, for instance to cleaning or other ordinary maintenance purposes, with an operation that is most simple and quick to carry out without any use of tools.

From the above description it will be further appreciated that the basic advantage offered by the improved machine according to the present invention, ie. the whirling motion imparted to the hot water-basic material mixture by the coiled tube 10, resides in the fact that the two components of the mixture are already perfectly homogenized by the time that they enter the chamber 1, so that the subsequent infusion process takes place under conditions ensuring high-quality results. The fact should moreover be stressed that said machine does not require any use of either hot water under pressure (which would make the construction of the machine considerably more complicated) or compressed air or steam (which would bring about the afore mentioned drawbacks).

An advantage that can be derived as an alternative to the above cited one resides in the possibility for the dosage of basic product (and, as a result, the operating costs of the machine) to be reduced if, on the contrary, no need is felt actually for the quality of the beverage produced with traditional methods and machines to be improved.

Further advantages derive from the various constructive peculiarities of the machine which have essentially been already pointed out in the course of the above description and, since they increase the reliability and simplify the maintenance of the machine, enable the operating costs thereof to be generally reduced.

## Claims

1. Automatic machine for preparing single-dose hot beverages, in particular coffee or the like, wherein
- a first unit comprises:
means (4,5,6) for feeding the hot water and the basic product required to prepare a given beverage in a substantially simultaneous, but separate manner;
an elongated infusion chamber (1) open at its end portions (2,3) and provided on its side surface (9) with at least one aperture (12) to enable a mixture of hot water and basic product of the beverage to be let thereinto;
a piston (7), which is displaceable along said infusion chamber (1) and has perimetric sealing edges (8) on the side surface (9) of the same chamber;
- a second unit comprises:
a filtering body (20), which is permeable to liquids and impermeable to said basic product of the beverage and has first and second mutually opposing surfaces (22,23);
- a third unit comprises:
a first stationary housing (31) which at least partially encloses the means used to actuate the piston (7) and the other moving parts of the machine;
- a forth unit comprises:
a second oscillating housing (41) including the means (30,34) adapted to position in a tightly sealing manner said filtering body (20) on to the lower end portion (3) of the infusion chamber (1), as well as means (43) adapted to remove the residuum (45) of basic product from said first surface (22) of the filtering body (20) after the
beverage has been dispensed,
**characterized in that**
said first unit further comprises a descending coiled tube (10) starting from the means (4,5,6) for substantially simultaneously and separately feeding the hot water and the basic product of the beverage, said coiled tube being adapted to impart a whirling motion to said hot water-basic beverage product mixture before the latter is introduced in the infusion chamber (1), and
said second unit further comprises tubular means (24) arranged below said second surface (23) to convey the beverage up to the dispensing outlet thereof.

2. Automatic machine according to claim 1, **characterized in that** said first unit comprising, among other things, the infusion chamber (1), the piston (7) and the coiled tube (10), is capable of being attached to said first stationary housing (31) by means of non-permanent fastening means (13,14,16,27,28) that automatically enable the infusion chamber (1) to settle in an angular arrangement with respect to said first stationary housing (31), thereby ensuring that the filtering body (20) tightly fits against the end portion (3) associated therewith.

3. Automatic machine according to claim 1 or 2, **characterized in that** said filtering body (20), of the metal type, is attached by means of a rigid support (21) to actuating means (30,34) adapted to withdraw said filtering body (20) into said oscillating housing (41) that is a part of said fourth unit of the machine, and at the same time remove, thanks to means (43) that are also provided inside said oscillating housing (41), the residuum (45) of basic product from said first surface (22) of the filtering body (20).

4. Automatic machine according to claim 3, **characterized in that** said rigid support (21) of the filtering body (20) substantially consists of a ring that is removably linked with one of said actuating means (30) through loosable joining means (25,26).

5. Automatic machine according to any of the preceding claims 1 to 4, **characterized in that** articulated means (36,37) are enclosed in said first stationary housing (31) for automatically taking up slacks of the moving parts of the same machine.

## Patentansprüche

1. Automatisches Gerät zum Herstellen von Heißgetränken, insbesondere Kaffee oder dergleichen, in einzelnen Portionen, wobei:
eine erste Einheit umfasst:
- eine Einrichtung (4, 5, 6), die das heiße Wasser und das Grundprodukt, das erforderlich ist, um ein bestimmtes Getränk herzustellen, im Wesentlichen simultan, jedoch separat zuführt;
- eine längliche Infusionskammer (1), die an ihren Endabschnitten (2, 3) offen ist und an ihren Seitenflächen (9) mit wenigstens einer Öffnung (12) versehen ist, um das Einlassen eines Gemisches aus heißem Wasser und Grundprodukt des Getränkes zu ermöglichen;
- einen Kolben (7), der in der Infusionskammer (1) verschoben werden kann und Umfangs-Dichtränder (8) an der Seitenfläche (9) der Kammer aufweist;
eine zweite Einheit umfasst:
- einen Filterkörper (20), der für Flüssigkeiten durchlässig und für das Grundprodukt des Getränkes undurchlässig ist und eine erste sowie eine zweite Fläche (22, 23) aufweist, die einander gegenüberliegen;
eine dritte Einheit umfasst:
- ein erstes, stationäres Gehäuse (31), das die Einrichtung, die dazu dient, den Kolben (7) zu betätigen, und die anderen beweglichen Teile des Gerätes wenigstens teilweise umschließt;
eine vierte Einheit umfasst:
- ein zweites, schwingendes Gehäuse (41), das die Einrichtung (30, 34), die den Filterkörper (20) eng abdichtend an dem unteren Abschnitt (3) der Infusionskammer (1) positioniert, sowie eine Einrichtung (43) enthält, die den Rückstand (45) des Grundproduktes von der ersten Fläche (22) des Filterkörpers (20) entfernt, nachdem das Getränk ausgegeben worden ist,
**dadurch gekennzeichnet, dass**
die erste Einheit des Weiteren eine absteigende, gewendette Röhre (10) umfasst, die von der Einrichtung (4, 5, 6) ausgeht, die das heiße Wasser und das Grundprodukt des Getränkes im Wesentlichen gleichzeitig und separat zuführt, wobei die gewendelte Röhre das Gemisch aus heißem Wasser und Getränke-Grundprodukt in eine Wirbelbewegung versetzt, bevor letzteres in die Infusionskammer (1) eingeleitet wird, und
die zweite Einheit des Weiteren eine röhrenförmige Einrichtung (24) umfasst, die unter der zweiten Fläche (23) angeordnet ist, um das Getränk bis zum Ausgabeauslass desselben zu transportieren.

2. Automatisches Gerät nach Anspruch 1, **dadurch gekennzeichnet, dass** die erste Einheit, die unter anderem die Infusionskammer (1), den Kolben (7) und die gewendelte Röhre (10) umfasst, an dem ersten, stationaren Gehäuse (31) mit einer nicht dauerhaften Befestigungseinrichtung (13, 14, 16, 27, 28) angebracht werden kann, die es der Infusionskammer (1) automatisch ermöglicht, eine winklige Anordnung in Bezug auf das erste, stationäre Gehäuse (31) einzunehmen, um so zu gewährleisten, dass der Filterkörper (20) eng an dem Endabschnitt (3) anliegt, der damit verbunden ist.

3. Automatisches Gerät nach Anspruch 1 oder 2, **dadurch gekennzeichnet, dass** der Filterkörper (20) vom Metalltyp mittels eines starren Trägers (21) an einer Betätigungseinrichtung (30, 34) angebracht ist, die den Filterkörper (20) in das schwingende Gehäuse (41) hinein zurückzieht, das einen Teil der vierten Einheit des Gerätes bildet, und gleichzeitig aufgrund der Einrichtung (43), die ebenfalls im Inneren des schwingenden Gehäuses (41) vorhanden ist, den Rückstand (45) des Grundproduktes von der ersten Fläche (22) des Filterkörpers (20) entfernt.

4. Automatisches Gerät nach Anspruch 3, **dadurch gekennzeichnet, dass** der starre Träger (21) des Filterkörpers (20) im Wesentlichen aus einem Ring besteht, der über eine lösbare Verbindungseinrichtung (25, 26) abnehmbar mit einer der Betätigungseinrichtungen (30) verbunden ist.

5. Automatisches Gerät nach einem der Ansprüche 1 bis 4, **dadurch gekennzeichnet, dass** eine Gelenkeinrichtung (36, 37) in dem ersten, stationären Gehäuse (31) eingeschlossen ist, die automatisch Spiel der beweglichen Teile des Gerätes ausgleicht.

## Revendications

1. Machine automatique pour préparer des boissons chaudes en portion unique, en particulier du café ou similaire, dans laquelle
- une première unité comprend :
des moyens **(4, 5, 6)** pour alimenter de l'eau chaude et le produit de base nécessaire pour préparer une boisson donnée d'une manière sensiblement simultanée, mais séparée ;
une chambre d'infusion allongée **(1)** ouverte au niveau de ses parties d'extrémité **(2, 3)** et munie, sur sa surface intérieure **(9)**, d'au moins une ouverture **(12)** pour permettre d'y introduire un mélange d'eau chaude et de produit de base de la boisson ;
un piston **(7)** qui est mobile le long de ladite chambre d'infusion **(1)** et qui a des bords d'étanchéité périmétriques **(8)** sur la surface latérale **(9)** de la même chambre ;
- une deuxième unité comprend :
un corps filtrant **(20)**, qui est perméable aux liquides et imperméable audit produit de base de la boisson et possède des premier et deuxième surfaces **(22, 23)** mutuellement opposées ;
- une troisième unité comprend :
un premier boîtier stationnaire **(31)** qui enserre au moins partiellement les moyens utilisés pour actionner le piston **(7)** et les autres parties mobiles de la machine;
- une quatrième unité comprend :
un deuxième boîtier oscillant **(41)** comprenant les moyens **(30, 34)** adaptés pour positionner d'une manière étroitement hermétique ledit corps filtrant **(20)** sur la partie d'extrémité inférieure **(3)** de la chambre d'infusion **(1)**, ainsi que des moyens **(43)** adaptés pour retirer le résidu **(45)** de produit de base depuis ladite première surface **(22)** du corps filtrant **(20)** après que la boisson ait été distribuée,
**caractérisée en ce que**
ladite première unité comprend un tube en serpentin descendant **(10)** partant des moyens **(4, 5, 6)** pour alimenter sensiblement simultanément et séparément l'eau chaude et le produit de base de la boisson, ledit tube en serpentin étant adapté pour imposer un mouvement de tourbillon audit mélange eau chaude-produit de base de la boisson avant que ce dernier soit introduit dans la chambre d'infusion **(1)**, et
ladite deuxième unité comprend de plus des moyens tubulaires **(24)** agencés sous ladite deuxième surface **(23)** pour transporter la boisson jusqu'à sa sortie de distribution.

2. Machine automatique selon la revendication 1, **caractérisée en ce que** ladite première unité comprenant, entre autres choses, la chambre d'infusion **(1)**, le piston **(7)** et le tube en serpentin **(10),** peut être fixée audit premier boîtier stationnaire **(31)** par des moyens de fixation non-permanents **(13, 14, 16, 27, 28)** qui permettent automatiquement à la chambre d'infusion **(1)** de se placer dans une position angulaire par rapport audit premier boîtier stationnaire **(31)**, assurant ainsi que le corps filtrant **(20)** se monte étroitement contre la partie d'extrémité **(3)** associée.

3. Machine automatique selon la revendication 1 ou 2, **caractérisée en ce que** ledit corps filtrant **(20),** du type métallique, est fixé au moyen d'un support rigide **(21)** à des moyens d'actionnement **(30, 34)** adaptés pour retirer ledit corps filtrant **(20)** dans ledit boîtier oscillant **(41)** qui fait partie de ladite quatrième unité de la machine et, dans le même temps, pour retirer, grâce à des moyens **(43)** qui sont également prévus dans ledit boîtier oscillant **(41)**, le résidu **(45)** de produit de base depuis ladite première surface **(22)** du corps filtrant **(20)**.

4. Machine automatique selon la revendication 3, **caractérisée en ce que** ledit support rigide **(21)** du corps filtrant **(20)** consiste essentiellement en un anneau qui est lié de manière amovible à l'un desdits moyens d'actionnement **(30)** par des moyens de jonction **(25, 26)** détachables.

5. Machine automatique selon l'une quelconque des revendications précédentes 1 à 4, **caractérisée en ce que** des moyens articulés **(36, 37)** sont enfermés dans ledit premier boîtier stationnaire **(31)** pour absorber automatiquement des débattements des parties mobiles de la même machine.
